# EUROPÄISCHE PATENTSCHRIFT

(11) **EP 1 262 721 B1**
(45) Veröffentlichungstag und Bekanntmachung des Hinweises auf die Patenterteilung: **26.01.2005**
(21) Anmeldenummer: 02011971.5
(22) Anmeldetag: 29.05.2002
(51) Int. Cl.: F24H 9/20, A47J 27/21

(54) **Elektrischer Heisswasserbereiter**
Electric water heater
Chauffe-eau électrique

(30) Priorität: 30.05.2001 DE 10126333
(43) Veröffentlichungstag der Anmeldung: 04.12.2002
(60) Teilanmeldung: 04014526.0
(73) Patentinhaber: BSH Bosch und Siemens Hausgeräte GmbH, 81739 München (DE)
(72) Erfinder: Helminger, Markus, 83313 Siegsdorf (DE); Lindert, Christian, 83126 Flintsbach a. Inn (DE)

(56) Entgegenhaltungen:
- US-A- 5 949 960

## Beschreibung

Die Erfindung betrifft einen elektrischen Heißwasserbereiter nach dem Oberbegriff des Anspruchs 1.

Bei einem derartigen Heißwasserbereiter ist es nachteilig, wenn die Heizeinrichtung ohne Wasser betrieben wird. Dies kann bei einem derartigen Heißwasserbereiter zum Anschluss an ein Wasserversorgungsnetz insbesondere bei der ersten Inbetriebnahme geschehen, wenn der Heißwasserbereiter an das Wasserversorgungsnetz angeschlossen, jedoch noch nicht mit Wasser gefüllt wurde. In einem solchen Fall wird die von der Heizeinrichtung erzeugte Wärme nicht abgeführt und es kann zu einer Überhitzung der Heizeinrichtung kommen. Um dies zu vermeiden, ist es bekannt, der Heizeinrichtung einen Temperaturschalter zuzuordnen, der im Fall einer Übertemperatur die Stromzufuhr der Heizeinrichtung unterbricht.

Um einer Beschädigung bei der Inbetriebnahme eines Heißwasserbereiters entgegen zu wirken, wenn der Heißwasserbereiter noch nicht mit Wasser gefüllt ist, umfasst der aus der US 5,949,960 bekannte Heißwasserbereiter eine wasserlösliche Substanz, z.B. ein Zuckerstück, so dass der Heißwasserbereiter erst dann eingeschaltet werden kann, wenn die wasserlösliche Substanz aufgelöst ist.

Weiterhin ist es zur Einhaltung von Sicherheitsvorschriften bekannt, diesen Temperaturschalter so auszugestalten, dass er sich nicht von selbst wieder zurücksetzt bzw. einschaltet, wenn die Temperatur wieder unter seine Schalttemperatur fällt. Dies erfordert nachteiligerweise nach einem Ansprechen das manuelle Rücksetzen oder den Austausch des Temperaturschalters, wozu in der Regel der Kundendienst nötig ist. Um dies zu vermeiden, ist es bekannt, einen Temperaturschalter einzusetzen, der sich nach seinem Ansprechen solange im Aus-Zustand hält, bis der Heißwasserbereiter für eine bestimmte Zeitdauer von der Stromversorgung getrennt wird. Auf diese Weise bleibt der Temperaturschalter nach seinem Ansprechen im Aus-Zustand und kann dennoch mit vergleichsweise geringem Aufwand wieder in den Ein-Zustand überführt werden, indem der Heißwasserbereiter wenigstens die bestimmte Zeitdauer von der Stromversorgung getrennt wird. Ein solcher Schalter ist nachteiligerweise mit einem hohen Aufwand verbunden und verbraucht in seinem selbsthaltenden Aus-Zustand weiter Strom. Zusätzlich erfordert das Zurücksetzen die Kenntnis über das Verfahren zum Zurücksetzen des selbsthaltenden Temperaturschalters, die gerade bei Benutzern, die bereits die Unachtsamkeit begangen haben, den Heißwasserbereiter ohne Wasser in Betrieb zu nehmen, häufig nicht vorhanden ist.

Der vorliegenden Erfindung liegt die Aufgabe zugrunde, einen Heißwasserbereiter der eingangs genannten Art zu schaffen, der im Fall einer Fehlbedienung das Risiko einer Überhitzung verringert und zur Verringerung der Anzahl der Kundendienstfälle beiträgt.

Erfindungsgemäß wird diese Aufgabe durch einen Heißwasserbereiter mit den Merkmalen des Patentanspruchs 1 gelöst. Vorteilhafte Weiterbildungen und Ausgestaltungen der vorliegenden Erfindung sind in den Unteransprüchen definiert. Der Heißwasserbereiter kann beispielsweise ein offener Kleinspeicher, ein Durchlauferhitzer oder allgemein ein Gerät zum Erhitzen von Wasser insbesondere mit einer festen Verbindung zu einem Wasseranschluss ein.

Durch das vorgespannte Betätigungselement findet eine ständige Überprüfung des Zustands des Fühlerkörpers statt, wobei das Betätigungselement nur dann in seine Ein-Stellung gebracht bzw. der Schalter nur dann eingeschaltet wird, wenn der Fühlerkörper dem vorgespannten Betätigungselement nicht mehr standhalten kann. Dies ist dann der Fall, wenn der Fühlerkörper von in den Behälter des Heißwasserbereiters einströmenden Wasser benetzt wird, so dass die Stromzufuhr der Heizeinrichtung erst geschlossen wird, wenn Wasser im Behälter vorhanden ist. Dazu kann der Fühlerkörper so beschaffen sein, dass er von Wasser zumindest teilweise aufgelöst und/oder aufgeweicht wird. Es ist auf diese Weise nicht mehr möglich, die Heizeinrichtung ohne Wasser in Betrieb zu nehmen. Somit können die Fälle vermieden werden, in denen die Heizeinrichtung trocken betrieben wird, mangels Wärmeabgabe an Wasser überhitzt und einen Übertemperaturschalter ansprechen läßt. Ein derartiger Schalter weist weiterhin den Vorteil auf, dass er sich mit einfachen Mitteln kostengünstig realisieren läßt und sehr zuverlässig ist. Wenn einmal der Fühlerkörper mit Wasser in Berührung gekommen ist und das Betätigungselement in seine Ein-Stellung gelangt ist, ändert sich dieser Zustand ohne äußere Einwirkung nie mehr, so dass der Schalter keine weitere Schaltvorgänge ausführen muss.

Zur Befestigung des Schalters weist der Behälter eine Aufnahme auf, die mit dem Behälterinnenraum mittels einer Öffnung verbunden ist und in die von außen der Schalter eingeführt und befestigt werden kann. Dabei kann in der Aufnahme auch ein Abschnitt zur Aufnahme des Fühlerkörpers ausgestaltet sein. Beispielsweise kann die Aufnahme im wesentlichen zylindrisch sein, wobei ein innenliegender, mit dem Behälterinnenraum verbundener Abschnitt zur Aufnahme des Fühlerkörpers und eines Abschnitts des Betätigungselements dient und einen geringeren Querschnitt aufweist als ein sich nach außen anschließender Abschnitt zur Aufnahme des Schalters.

Die Aufnahme für den Schalter ist einstückig mit dem Behälter ausgeführt, so dass die erfindungsgemäße Lösung insbesondere dann kostengünstig verwirklicht werden, wenn der Behälter aus Kunststoff gefertigt wird.

Vorteilhafterweise ist der Fühlerkörper so eingerichtet, dass er sich nach Berührung mit Wasser erst nach einer bestimmten Zeitdauer soweit verändert hat, dass der Schalter in seinen Ein-Zustand gelangen kann. Diese Zeitdauer kann so bemessen sein, dass in ihr bei einer üblichen Einströmgeschwindigkeit von Wasser in den Behälter dieser so weit mit Wasser gefüllt wird, dass die Heizeinrichtung von dem eingeströmten Wasser gekühlt werden kann. Die Heizeinrichtung kann innerhalb des Behälters angeordnet sein oder außerhalb des Behälters angeordnet und an seinen Innenraum thermisch angekoppelt sein. Wenn der Heißwasserbereiter einen Thermostaten aufweist, der die Heizeinrichtung bei Erreichen einer bestimmten Temperatur abschaltet, kann der Fühlerkörper so eingerichtet sein, dass sich der Behälter weiterhin in der vorgenannten Zeitdauer bis zum Thermostaten füllt, so dass die von der Heizeinrichtung erzeugte Wärme über das Wasser zum Thermostaten transportiert werden kann und der Thermostat für ein Abschalten der Heizeinrichtung bei einer bestimmten Temperatur sorgen kann.

Weiterhin kann der Fühlerkörper auch oberhalb der Heizeinrichtung angeordnet sein, so dass bei ordnungsgemäßer Montage des Heißwasserbereiters der Fühlerkörper erst vom Wasser erreicht wird, wenn der Behälter bis zur Heizeinrichtung mit Wasser gefüllt ist. In diesem Fall ist gewährleistet, dass die von der Heizeinrichtung erzeugte Wärme an das Wasser abgegeben werden kann und ein Überhitzen der Heizeinrichtung vermieden wird.

Wenn das Betätigungselement beispielsweise mittels eines Dichtrings gegen den Behälter abgedichtet ist, muss in diesem Fall kein wasserdichter Schalter verwendet werden, da sich der Schalter auf der in Bezug auf das Behälterinnere außen gelegenen Seite der Abdichtung befindet. Es kann somit ein kostengünstigerer, nicht wasserdichter Schalter verwendet werden, da der Behälter vom Betätigungselement abgedichtet wird.

Dazu kann auch ein Aufnahmeraum für den Fühlerkörper vorgesehen werden, in dem das Wasser langsamer steigt als im Behälter. Damit kann erreicht werden, dass der Fühlerkörper erst vom Wasser erreicht wird und sich der Schalter einschalten kann, wenn das Wasser im Behälter einen bestimmten Stand erreicht hat, der vorteilhafterweise oberhalb der Heizeinrichtung liegt. Damit kann der Fühlerkörper auch unterhalb der Heizeinrichtung oder auf gleicher Höhe angeordnet werden und dennoch die Sicherheit erreicht werden, dass die Heizeinrichtung erst eingeschaltet werden kann, wenn die von ihr erzeugte Wärme vom Wasser aufgenommen werden kann. Der Aufnahmeraum für den Fühlerkörper kann beispielsweise zum Behälterinnenraum hin eine untere Öffnung, durch die Wasser eindringen kann, und eine obere Öffnung aufweisen, durch die Luft entweichen kann, wobei zumindest eine der Öffnungen so klein ist, dass ein verzögertes Ansteigen des Wassers in dem Aufnahmeraum erreicht wird. Weiterhin kann der Aufnahmeraum mit dem Behälterinnenraum auch durch einen nicht waagrechten Schlitz verbunden sein, durch den sowohl Wasser einströmen als auch Luft entweichen kann.

Wenn das Betätigungselement in seiner Ein-Stellung eine Öffnung des Behälters zwischen dem Behälterinnenraum und dem Fühlerkörper oder zwischen dem Behälterinnenraum und dem Schalter dicht schließt, kann damit die Gefahr von Undichtigkeiten des Behälters verringert werden und kann der Schalter gegenüber dem Wasserdruck in dem Behälter isoliert werden. Damit kann die Gefahr verringert werden, dass der Schalter mit dem Wasser in Berührung kommt und korrodiert oder das Wasser in Berührung mit stromführenden Teilen gerät. Dabei kann beispielsweise eine mit dem Fühlerkörper in Berührung stehende Fläche des Betätigungselements als Dichtfläche ausgestaltet sein, die mit einer anderen Fläche dichtend zusammenwirken kann, die um die zu verschließende Öffnung herum ausgestaltet ist. Die Dichtfläche des Betätigungselements kann weiterhin zumindest in dem Bereich, der mit der anderen Dichtfläche zusammenwirkt, konisch ausgestaltet sein.

Zum Abdichten des Behälters mittels des Betätigungselements kann das Betätigungselement auch eine verschiebbare Schubstange sein, die einen radialen Vorsprung entlang des Umfangs der Schubstange aufweist, der in der Ein-Stellung des Betätigungselements dichtend mit einer Dichtfläche der Zugangsöffnung des Behälters verbunden ist. Auf diese Weise kann die Dichtstelle vom Fühlerkörper beabstandet werden und vermieden werden, dass Reste des Fühlerkörpers die Abdichtung beeinträchtigen.

Zumindest der mit dem Fühlerkörper in Berührung stehende Teil des Betätigungselements des Schalters kann aus Kunststoff bzw. aus einem wasserbeständigen Material sein.

Vorteilhafterweise weist der Fühlerkörper einen wasserlöslichen, ungiftigen und nicht gesundheitsschädlichem Stoff auf, so dass bei seiner Veränderung unter der Einwirkung von Wasser keine schädlichen Stoffe in das Wasser geraten können.

Zwischen dem Abschnitt zur Aufnahme des Fühlerkörpers und dem Abschnitt zur Aufnahme des Schalters kann ein Vorsprung als Anschlag für den Schalter vorgesehen sein. Vorteilhafterweise ist zur Befestigung des Schalters eine Befestigungseinrichtung in Gestalt einer Schnappbefestigung vorgesehen, so dass der Schalter zur Montage nur in die Aufnahme eingeschoben und verrastet werden braucht. Zur Abdichtung kann ein Dichtelement zwischen dem Betätigungselement und einem Abschnitt der Aufnahme vorgesehen sein, so dass sich das Betätigungselement zum Betätigen des Schalters bewegen kann und der Behälter nach außen abgedichtet ist.

Nachfolgend sind zwei Ausführungsbeispiele der Erfindung anhand schematischer Darstellungen näher beschrieben. Darin zeigen:
- Fig. 1: eine Schnittansicht eines Teils eines erfindungsgemäßen Heißwasserbereiters mit einem Fühlerkörper aus wasserlöslichem Stoff,
- Fig. 2: eine Schnittansicht eines Teils eines erfindungsgemäßen Heißwasserbereiters mit einem nicht löslichen, verschieblichen Fühlerkörper.

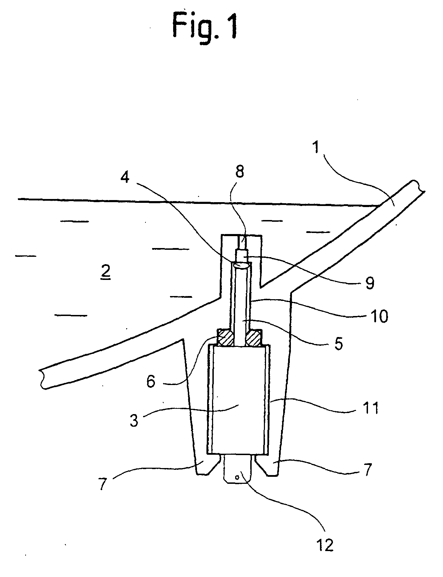

In Fig. 1 ist ein unterer Abschnitt eines Behälters 1 eines erfindungsgemäßen Heißwasserbereiters dargestellt. Der Behälter 1 weist zusätzlich nicht dargestellt einen Zulauf und einen Ablauf für Wasser 2 zum Anschluss an ein Wasserversorgungsnetz und eine Heizeinrichtung zum Erhitzen des Wassers 2 im Behälter 1 auf.

Der Behälter 1 weist im dargestellten unteren Bereich eine Öffnung 8 auf, die vom Behälterinnenraum in eine im wesentlichen zylindrische Aufnahme 9, 10, 11 führt, in der ein Fühlerkörper 4 und ein Schalter 3 mit einem Betätigungselement 5 in Gestalt einer zylindrischen Stange angeordnet sind. Der Fühlerkörper 4 besteht aus einem wasserlöslichen und ungiftigen Stoff, wie beispielsweise Zucker, Speisesalz oder Saccharin. Der Schalter 3 ist so ausgeführt, dass er das Betätigungselement 5 nach oben gegen den Fühlerkörper 4 vorspannt. Der Schalter 3 ist ausgeschaltet, wenn sich das Betätigungselement 5 in der dargestellten unteren Aus-Stellung befindet, und schaltet sich ein, wenn sich das Betätigungselement 5 nach oben in eine Ein-Stellung bewegt. In Fig. 1 wird das Betätigungselement 5 in der unteren Aus-Stellung von dem Fühlerkörper 4 gehalten, der ausreichend fest ist, um der Vorspannung des Betätigungselements 5 standzuhalten.

Die Aufnahme für den Schalter 3, das Betätigungselement 5 und den Fühlerkörper 4 weist drei untereinander angeordnete Abschnitte 9, 10, 11 auf. Ein oberster Abschnitt 9 schließt sich direkt an die Öffnung 8 an und besitzt einen Querschnitt, der im wesentlichen dem des Betätigungselements 5 entspricht und ein Eindringen zumindest des oberen Abschnitts des Betätigungselement 5 in den Abschnitt 9 ermöglicht. Unten an den Abschnitt 9 schließt sich ein mittleren Abschnitt 10 an, dessen Querschnitt größer als der des Betätigungselements 5 und des Abschnitts 9 und kleiner als der des Schalters 3 ist, so dass der Übergang vom mittleren Abschnitt 10 zu einem sich daran anschließenden untersten Abschnitt 11 einen Anschlag für den Schalter 3 bildet. Der Querschnitt des untersten Abschnitts 11 ist so groß bemessen, dass der Schalter 3 in diesen Abschnitt eingeführt werden kann. Zwischen dem mittleren Abschnitt 10 und dem untersten Abschnitt 11 ist weiterhin ein kleiner Absatz für einen Dichtring 6 ausgestaltet, der das Betätigungselement 5 gegen die Wand der Aufnahme 9, 10, 11 abdichtet und so zusammen mit dem Betätigungselement 5 den Behälter 1 dicht verschließt.

Um das Betätigungselement 5 in seiner Aus-Stellung zu halten, besitzt der Fühlerkörper 4 einen größeren Querschnitt als der oberste Aufnahmeabschnitt 9 und stützt sich mit seinem oberen Ende gegen den Absatz zwischen dem obersten Abschnitt 9 und dem mittleren Abschnitt 10 ab.

Die Wand des untersten Abschnitts 11 der Aufnahme 9, 10, 11 weist unten senkrecht verlaufende Längsschlitze auf, wobei die Wandabschnitte zwischen den Längsschlitzen in Rasthaken 7 zum Befestigen des Schalters 3 im untersten Aufnahmeabschnitt 11 enden. Zur Montage wird zunächst der Fühlerkörper 4 in die Aufnahme 9, 10, 11 bis in den mittleren Abschnitt 10 geschoben und dann der Schalter 3 mit seinem Betätigungselement 5 in den mittleren bzw. untersten Aufnahmeabschnitt 10 bzw. 11 eingeschoben und mittels der Rasthaken 7 verrastet. Anschließend kann der Stromkreis für die Heizeinrichtung über elektrische Anschlüsse 12 des Schalters 3 geschlossen werden.

Wenn nun der Heißwasserbereiter an das Wasserversorgungsnetz angeschlossen und die Wasserzufuhr geöffnet wird, strömt Wasser 2 in den Behälter 1 und füllt diesen. Solange der Stand des Wassers 2 im Behälter 1 unterhalb der Öffnung 8 liegt, kann kein Wasser 2 durch die Öffnung 8 und den obersten Aufnahmeabschnitt 9 zum Fühlerkörper 4 gelangen, so dass der Schalter 3 ausgeschaltet bleibt und die Heizeinrichtung nicht in Betrieb genommen werden kann.

Erreicht der Wasserstand die Öffnung 8, gelangt das Wasser 2 zum Fühlerkörper 4 und beginnt, diesen aufzulösen. Sobald der Fühlerkörper 4 ausreichend aufgelöst ist, um der Vorspannung des Betätigungselements 5 nicht mehr standhalten zu können, schiebt sich dieses in den obersten Aufnahmeabschnitt 9, wobei der Schalter 3 eingeschaltet wird und den Stromkreis für die Heizeinrichtung schließt. Die Öffnung 8 befindet sich oberhalb der Heizeinrichtung, so dass zu diesem Zeitpunkt bereits genügend Wasser 2 im Behälter 1 ist, damit selbst bei sofortiger Inbetriebnahme der Heizeinrichtung von dieser erzeugte Wärme vom Wasser 2 aufgenommen werden kann. Das obere Ende des Betätigungselements 5 wird von der Verspannung gegen den Rand der Öffnung 8 gedrückt, so dass dort von dem Betätigungselement 5 zum Verschluss des Behälters 1 zusätzlich zum Dichtring 6 eine weitere Dichtstelle geschaffen wird.

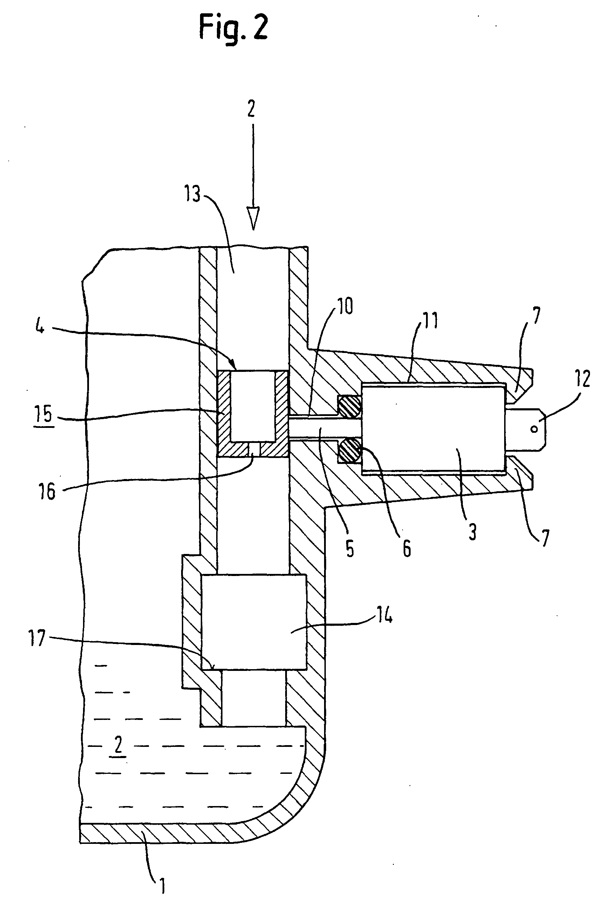

In Figur 2 ist ein unterer Abschnitt des Behälters 1 im Schnitt dargestellt. Entlang der Innenwand des Behälters 1 erstreckt sich zumindest ein Teil eines Wasserkanals 13. Der dargestellte Wasserkanal 13 ist in einem Zulauf zu dem Wassererhitzer angeordnet. Über den Wasserkanal 13 wird Wasser 2 über einen nicht dargestellten Anschluss an ein Wasserversorgungsnetz dem Innenraum des Behälters 1 zugeführt. An der Außenseite des Behälters 1 sind Rasthaken 7 vorgesehen, die zur Befestigung des Schalters 3 dienen. Der Schalter 3 weist das Betätigungselement 5 auf. Über den Abschnitt 10 ragt das Betätigungselement 5 in den Wasserkanal 13 hinein. Das unter Vorspannung gehaltene Betätigungselement 5 ragt in der Ein-Stellung des Schalters über die Wand hinweg in das Innere des Zulaufkanals hinein. In der dargestellten Position befindet sich der Schalter 3 in der Ausstellung. In Höhe des Schalters 3 befindet sich innerhalb des Wasserkanals 13 der Fühlerkörper 4.

Der Fühlerkörper 4 ist als hohler Zylinderkörper 15 ausgebildet. Der Zylinderkörper 15 weist eine Bodenfläche mit einer Öffnung 16 auf. Der Zylinderkörper 15 ist axial innerhalb des Wasserkanals 13 verschiebbar. In der in Figur 2 gezeigten Position befindet sich der Zylinderkörper 15 in seiner ersten Position. In dieser ersten Position ist das Betätigungselement 5 daran gehindert, in das Innere des Wasserkanals 13 einzudringen. In der gezeigten Position befindet sich der Schalter in der Aus-Stellung. Der Zylinderkörper 15 kann innerhalb des Wasserkanals 13 ein relativ großes Spiel aufweisen, da der Zylinderkörper 15 aufgrund der Vorspannung des Betätigungselement 5 im Wasserkanal 13 festgeklemmt ist. Wird Wasser 2 von oben in den Wasserkanal 13 geleitet, so wird aufgrund des entstehenden Staudruckes der Zylinderkörper 15 nach unten geschoben. Wird eine Öffnung 16 vorgesehen, so kann eine geringe Wassermenge in den Innenraum des Behälters 1 einströmen, obwohl sich der Zylinderkörper 15 noch in der ersten Position befindet. So kann eine gewisse Menge Wasser bereits in dem Innenraum des Behälters 1 einfließen noch bevor der Zylinderkörper 15 aus seiner Position geschoben ist. Wird ein großes Spiel zwischen dem Betätigungselement 5 und dem Wasserkanal 13 vorgesehen, kann zuströmendes Wasser in geringer Menge an dem Betätigungselement 5 vorbeiströmen. Bei dieser Variante erübrigt sich dann eine gesonderte Öffnung 16 im Boden des Betätigungselements 5. Die Bodenfläche kann auch ohne Öffnung 16 als geschlossener Boden ausgebildet sein. Bei anhaltendem Staudruck des zugeführten Wassers 2 verschiebt sich der Zylinderkörper 15 bis in einen Auffangraum 14. Im Auffangraum 14 kommt der Zylinderkörper 15 an einem Rückhaltemittel 17 am Auffangraum 14 zum Stehen. In der dargestellten Ausführungsform wird das Rückhaltemittel 17 durch einen Absatz innerhalb des Wasserkanals 13 gebildet. Dieser Absatz verengt am Ende des Auffangraumes 14 den Kanalverschnitt auf einen geringeren Durchmesser als der Durchmesser des Zylinderkörpers 15. Wenn sich der Zylinderkörper 15 im Auffangraum 14 befindet, wird ein Spaltraum gebildet, durch den zugeführtes Wasser 2 den Zylinderkörper 15 umspülen oder durchspülen kann, um in den Innenraum des Behälters 1 zu gelangen. Aufgrund des Rückhaltemittels 17 ist verhindert, dass der Zylinderkörper 15 in den Innenraum des Behälters ausgeschwemmt wird.

In Abhängigkeit von der Vorspannungskraft des Betätigungselements 15, welches gegen den Zylinderkörper 15 in der ersten Position drückt und in Abhängigkeit von der Größe der Öffnung 16 in der Bodenfläche des Zylinderkörpers 15 kann die Haltekraft, bzw. die Kraft zum Bewegen des Zylinderkörpers 15 vorbestimmt werden. Je nach vorbestimmter Kraft wird sich der Zylinderkörper 15 mehr oder weniger schnell aus der ersten Position herausbewegen und in den Auffangraum 14 bewegt werden. Diese zeitliche Verzögerung ermöglicht es, Wasser 2 in den Innenraum des Behälters 1 einzulaufen, noch bevor der Zylinderkörper 15 das Betätigungselement 5 freigibt und den Schalter in die Einstellung bewegt. Somit kann verhindert werden, dass die Heizeinrichtung eingeschaltet werden kann, bevor eine Mindestmenge an Wasser 2 in den Innenraum des Behälters 1 eingeflossen ist.

## Patentansprüche

1. Elektrischer Heißwasserbereiter mit einem Behälter (1) und einer elektrischen Heizeinrichtung zum Erhitzen des Wassers (2) im Behälter (1), welcher Heißwasserbereiter einen Schalter (3) mit einem Betätigungselement (5) aufweist, das gegen einen Fühlerkörper (4) in Richtung einer Ein-Stellung vorgespannt ist, in der der Schalter (3) eine Stromzufuhr für die Heizeinrichtung freigibt, wobei der Fühlerkörper (4) derart eingerichtet ist, dass er das Betätigungselement (5) des Schalters (3) ausschließlich im trockenen Zustand in einer Aus-Stellung hält, in der der Schalter (3) die Stromzufuhr für die Heizeinrichtung unterbricht, und der Fühlerkörper (4) mit dem Innenraum des Behälters (1) derart verbunden ist, dass in den Behälter strömendes Wasser (2) den Fühlerkörper (4) erreicht,
**dadurch gekennzeichnet, dass**
der Behälter (1) eine Aufnahme (9, 10, 11) für den Fühlerkörper (4) aufweist, die einstückig mit dem Behälter (1) ausgebildet ist und die mittels einer ersten Öffnung (8) mit dem Innenraum des Behälters (1) und mittels einer zweiten Öffnung mit dem Außenraum des Behälters (1) verbunden ist, und dass der Behälter (1) oder die Aufnahme (9, 10, 11) eine Befestigungseinrichtung (7) zum Befestigen des Schalters (3) in der Aufnahme (9, 10, 11) aufweist.

2. Elektrischer Heißwasserbereiter nach Anspruch 1, **dadurch gekennzeichnet, dass** der Heißwasserbereiter so eingerichtet ist, dass der Fühlerkörper (4) von in den Behälter (1) einströmenden Wasser (2) erst nach einer bestimmten Zeitdauer soweit verändert wird, dass das Betätigungselement (5) des Schalters (3) in seine Ein-Stellung gelangen kann.

3. Elektrischer Heißwasserbereiter nach Anspruch 1 oder 2, **dadurch gekennzeichnet, dass** der Fühlerkörper (4) über der Heizeinrichtung angeordnet ist.

4. Elektrischer Heißwasserbereiter, nach einem der Ansprüche 1 bis 3, **dadurch gekennzeichnet, dass** das Betätigungselement (5) des Schalters (3) in seiner Ein-Stellung eine Öffnung (8) des Behälters (1) verschließt, die in der Aus-Stellung des Betätigungselements (5) des Schalters (3) den Innenraum des Behälters (1) mit einem Aufnahmeraum (9, 10, 11) für den Schalter (3) verbindet.

5. Elektrischer Heißwasserbereiter, nach einem der Ansprüche 1 bis 4, **dadurch gekennzeichnet, dass** das Betätigungselement (5) des Schalters (3) gegen den Behälter (1) abgedichtet ist.

6. Elektrischer Heißwasserbereiter nach einem der Ansprüche 1 bis 5, **dadurch gekennzeichnet, dass** der Fühlerkörper (4) einen wasserlöslichen und physiologisch unbedenklichen Stoff enthält.

7. Elektrischer Heißwasserbereiter nach einem der Ansprüche 1 bis 6, **dadurch gekennzeichnet, dass** der Fühlerkörper (4) in einem Aufnahmeraum angeordnet ist, der mit dem Innenraum des Behälters (1) derart verbunden ist, dass in dem Aufnahmeraum in den Behälter (1) einströmendes Wasser (2) langsamer steigt als in dem Behälter (1).

8. Elektrischer Heißwasserbereiter nach Anspruch 7, **dadurch gekennzeichnet, dass** die Aufnahme einen ersten Abschnitt (10) zum Aufnehmen des Fühlerkörpers (4) und des Betätigungselements (5) und einen zweiten Abschnitt (11) zum Aufnehmen des Schalters (3) aufweist und zwischen dem ersten Abschnitt (10) der Aufnahme und dem zweiten Abschnitt (11) der Aufnahme ein Vorsprung als Anschlag für den Schalter (3) ausgestaltet ist.

## Claims

1. Electric hot water preparation device with a container (1) and an electric heating device for heating the water (2) in the container (1), which hot water preparation device has a switch (3) with an actuating element (5) biased against a sensor body (4) in the direction of an 'on' setting in which the switch (3) frees a current feed for the feeding device, wherein the sensor body (4) is arranged in such a manner that it keeps the actuating element (5) of the switch (3) exclusively in the dry state in an 'off setting in which the switch (3) interrupts the current feed for the heating device, and which sensor body (4) is connected with the interior space of the container (1) in such a manner that water (2) flowing into the container reaches the sensor body (4), **characterised in that** the container (1) comprises a receptacle (9, 10, 11) for the sensor body (4), which is formed integrally with the container (1) and which is connected by means of a first opening (8) with the interior space of the container (1) and by means of a second opening with the exterior space of the container (1) and that the container (1) or the receptacle (9, 10, 11) has a fastening device (7) for fastening the switch (3) in the receptacle (9, 10, 11).

2. Electric hot water preparation device according to claim 1, **characterised in that** the hot water preparation device is so arranged that the sensor body (4) is changed to such an extent after a specific period of time by water (2) flowing into the container (1) that the actuating element (5) of the switch (3) can pass into its 'on' setting.

3. Electric hot water preparation device according to claim 1 or 2, **characterised in that** the sensor body (4) is arranged above the heating device.

4. Electric hot water preparation device according to one of claims 1 to 3, **characterised in that** the actuating element (5) of the switch (3) in its 'on' setting closes an opening (8) of the container (1) which in the 'off setting of the actuating element (5) of the switch (3) connects the interior space of the container (1) with a receiving space (9, 10, 11) for the switch (3).

5. Electric hot water preparation device according to one of claims 1 to 4, **characterised in that** the actuating element (5) of the switch (3) is sealed relative to the container (1).

6. Electric hot water preparation device according to one of claims 1 to 5, **characterised in that** the sensor body (4) contains a water-soluble substance recognised as physiologically safe.

7. Electric hot water preparation device according to one of claims 1 to 6, **characterised in that** the sensor body (4) is arranged in a receiving space which is connected with the interior space of the container (1) in such a manner that water (2) flowing into the receiving space in the container (1) rises more slowly than in the container (1).

8. Electric hot water preparation device according to claim 7, **characterised in that** the receptacle has a first section (10) for receiving the sensor body (4) and the actuating element (5) and a second section (11) for receiving the switch (3) and a projection as abutment for the switch (3) is formed between the first section (10) of the receptacle and the second section (11) of the receptacle.

## Revendications

1. Chauffe-eau électrique avec un récipient (1) et un dispositif électrique de chauffage pour chauffer l'eau (2) présente dans le récipient (1), lequel chauffe-eau présente un contacteur (3) muni d'un élément d'actionnement (5) qui est précontraint contre un corps de détecteur (4) en direction d'une position de marche dans laquelle le contacteur (3) libère une alimentation en courant pour le dispositif de chauffage, le corps de détecteur (4) étant agencé de telle façon qu'il maintient uniquement lorsqu'il est sec l'élément d'actionnement (5) du contacteur (3) dans la position d'arrêt dans laquelle le contacteur (3) interrompt l'alimentation en courant du dispositif de chauffage, et le corps de détecteur (4) étant relié à l'espace intérieur du récipient (1) de telle sorte que l'eau (2) qui pénètre dans le récipient atteigne le corps de détecteur (4),
**caractérisé en ce que**
le récipient (1) présente pour le corps de détecteur (4) un logement (9, 10, 11) qui est réalisé d'une seule pièce avec le récipient (1) et qui est relié à l'espace intérieur du récipient (1) par une première ouverture (8) et à l'espace extérieur du récipient (1) par une deuxième ouverture, et **en ce que** le récipient (1) ou le logement (9, 10, 11) présentent un dispositif de fixation (7) qui fixe le contacteur (3) dans le logement (9, 10, 11).

2. Chauffe-eau électrique selon la revendication 1, **caractérisé en ce que** le chauffe-eau électrique est configuré de telle façon que ce n'est qu'après une durée déterminé que l'eau (2) qui pénètre dans le récipient (1) modifie le corps de détecteur (4) suffisamment pour que l'élément d'actionnement (5) du contacteur (3) puisse prendre sa position de marche.

3. Chauffe-eau électrique selon les revendications 1 ou 2, **caractérisé en ce que** le corps de détecteur (4) est agencé au-dessus du dispositif de chauffage.

4. Chauffe-eau électrique selon l'une des revendications 1 à 3, **caractérisé en ce que** lorsqu'il est en position de marche, l'élément d'actionnement (5) du contacteur (3) ferme une ouverture (8) du récipient (1) qui relie l'espace intérieur du récipient (1) à un espace de logement (9, 10, 11) pour le contacteur (3) lorsque l'élément d'actionnement (5) du contacteur (3) est en position d'arrêt.

5. Chauffe-eau électrique selon l'une des revendications 1 à 4, **caractérisé en ce que** l'élément d'actionnement (5) du contacteur (3) est étanche vis-à-vis du récipient (1).

6. Chauffe-eau électrique selon l'une des revendications 1 à 5, **caractérisé en ce que** le corps de détecteur (4) contient une matière soluble dans l'eau et physiologiquement inoffensive.

7. Chauffe-eau électrique selon l'une des revendications 1 à 6, **caractérisé en ce que** le corps de détecteur (4) est agencé dans un espace de logement qui est relié à l'espace intérieur du récipient (1) de telle façon que l'eau (2) qui pénètre dans le récipient (1) monte plus lentement dans l'espace de logement que dans le récipient (1).

8. Chauffe-eau électrique selon la revendication 7, **caractérisé en ce que** le logement présente une première partie (10) qui loge le corps de détecteur (4) et l'élément d'actionnement (5) et une deuxième partie (11) qui loge le contacteur (3) et **en ce qu'**une saillie située entre la première partie (10) du logement et la deuxième partie (11) du logement est configurée comme butée pour le contacteur (3).
